(19) Europäisches Patentamt

European Patent Office

Office européen des brevets

(11) EP 1 630 129 A1

(12) EUROPEAN PATENT APPLICATION

(43) Date of publication:
01.03.2006 Bulletin 2006/09

(51) Int Cl.:
$C01B\ 3/26$ (2006.01)  $C01B\ 31/18$ (2006.01)
$C01B\ 31/20$ (2006.01)  $B01J\ 19/24$ (2006.01)

(21) Application number: 05255159.5

(22) Date of filing: 22.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 25.08.2004 US 604285 P
06.06.2005 US 145835

(71) Applicant: THE BOC GROUP, INC.
New Providence, NJ 07974-2082 (US)

(72) Inventors:
• Tamhankar, Satish Shankar
Scotch Plains, NJ 07076 (US)
• Krishnan, Sekharipuram Viswanathan
Bridgewater, NJ 08807 (US)
• Leison, Michael Haiyun
Macungie, PA 18062 (US)

(74) Representative: Wickham, Michael
The BOC Group plc,
Chertsey Road
Windlesham,
Surrey GU20 6HJ (GB)

(54) **Hydrogen production process**

(57) The present invention provides a process for producing hydrogen by passing a hydrocarbon-containing gas (1) over a ceramic monolith supported catalyst (A or B) at a temperature sufficient to produce hydrogen and to form carbon deposits on the catalyst; and passing an oxygen-containing gas (2) over the ceramic monolith supported catalyst at a temperature sufficient to react with the carbon on the ceramic monolith supported catalyst and to produce carbon monoxide. The process is typically performed cyclically using one or more beds in a manner such that hydrogen is produced followed by carbon monoxide.

FIG. 1

EP 1 630 129 A1

**Description**

BACKGROUND OF THE INVENTION

This invention relates to a process for the production of hydrogen.

The conversion of hydrocarbons to hydrogen and carbon monoxide containing gases is well known. Examples of such processes include catalytic steam reforming, auto-thermal catalytic reforming, catalytic partial oxidation and non-catalytic partial oxidation. Each of these processes has advantages and disadvantages and produces a gas mixture, which can have various ratios of hydrogen to carbon monoxide, known as synthesis gas.

Partial oxidation processes are also well known and the art is replete with various catalytic partial oxidation processes. Partial oxidation is an exothermic reaction wherein a hydrocarbon gas, such as methane, and an oxygen-containing gas, such as air, is contacted with a catalyst at elevated temperatures to produce a reaction product containing high concentrations of hydrogen and carbon monoxide. The catalysts used in these processes are typically noble metals, such as platinum or rhodium, and other transition metals, such as nickel on a suitable support.

Partial oxidation processes convert hydrocarbon-containing gases, such as natural gas, to hydrogen, carbon monoxide and other trace components such as carbon dioxide and water. The process is typically carried out by injecting preheated hydrocarbons and an oxygen-containing gas into a combustion chamber where oxidation of the hydrocarbons occurs with less than stoichiometric amounts of oxygen for incomplete combustion. This reaction is conducted at very high temperatures, such as in excess of 700°C and often in excess of 1000° C, and pressures up to 150 atmospheres. In some reactions, steam or carbon dioxide can also be injected into the combustion chamber to modify the synthesis gas product and to adjust the ratio of hydrogen to carbon monoxide.

More recently, partial oxidation processes have been disclosed in which the hydrocarbon gas is contacted with the oxygen-containing gas at high space velocities in the presence of a catalyst such as a metal deposited on a ceramic foam (monolith) support. The monolith supports are impregnated with a noble metal such as platinum, palladium or rhodium, or other transition metals such as nickel, cobalt, chromium and the like. Typically, these monolith supports are prepared from solid refractory or ceramic materials such as alumina, zirconia, magnesia and the like. During operation of these reactions, the hydrocarbon feed gases and oxygen-containing gases are initially contacted with the metal catalyst at temperatures in excess of 400°C, typically in excess of 600°C, and at a standard gas hourly space velocity (GHSV) of over 100,000 per hour.

However, these processes still require downstream separation to obtain hydrogen and/or carbon monoxide as separate products. In the hydrocarbon cracking process of this invention, hydrogen and carbon monoxide are separately produced directly in a single reactor by operating in a cyclic fashion.

Earlier methods for producing hydrogen from hydrocarbon decomposition suffer from excessive pressure drop in fixed bed operations or operational complexity in circulating fluid beds. The present method will provide a solution to these problems as the ceramic monolith has a high porosity with large pore size and will cause negligible pressure drop during operation. Further, there is no movement of the catalyst and the resulting attrition, plugging or other problems associated with circulating fluid beds. In addition, earlier methods focused upon the products being either only hydrogen alone or hydrogen and carbon products. The present method will enable the selective generation of pure hydrogen, CO or $CO_2$ by tuning the operation parameters; thus upgrading the value of products significantly.

SUMMARY OF THE INVENTION

The present invention provides a process for producing hydrogen comprising the steps of:

a) passing a first gas stream containing at least one hydrocarbon over a ceramic monolith supported catalyst at a temperature sufficient to produce a gaseous reaction product containing hydrogen and to form a solid reaction product containing carbon on the ceramic monolith supported catalyst; and

b) passing a second gas stream containing at least one oxygen-containing gas over said ceramic monolith supported catalyst at a temperature sufficient to react with the solid reaction product containing carbon formed on the ceramic monolith supported catalyst in step (a) to produce a gaseous reaction product containing at least one of carbon monoxide and carbon dioxide.

The process of the present invention is preferably carried out cyclically and preferably in the production of synthesis gas from a single unit reactor. The flows of the first and second gas flows will alternate between at least two reactors to obtain a continuous flow of product. Between steps (a) and (b), the reactor containing the ceramic monolith supported catalyst is briefly purged with a gas, such as nitrogen or steam, to inhibit the formation of flammable gas mixtures.

In some examples of the process according to the invention, the carbon monoxide can be captured as a second product or can be fed to a shift reactor to produce more hydrogen.

In alternative examples of the process according to the invention, the conditions in step (b) can be adjusted to obtain carbon dioxide as the only product by completely oxidizing the carbon deposited formed in step (a).

The feed flow rates of the first gas stream and operating temperature of the ceramic monolith supported catalyst may be controlled to obtain a gaseous reaction product that primarily comprises methane and about 20 to 30% by volume hydrogen.

The first gas stream is preferably passed over the ceramic monolith supported catalyst at a pressure ranging from about 1 bar to about 30 bar.

In step (b) of the process according to the invention, a second gas stream preferably comprises air, oxygen-enriched air or pure oxygen or a mixture of oxygen and steam. The carbon is typically deposited primarily as coke on the ceramic monolith supported catalyst. The operating conditions are preferably tuned such that step (b) forms at least one of carbon monoxide and carbon dioxide. The carbon monoxide can be captured as a product or directed to a shift gas reactor to produce more hydrogen.

Between these steps (a) and (b), a gas, selected from the group consisting of nitrogen, argon, helium and steam, may be introduced into the reactor chamber to purge out the chamber. The gas is preferably steam. This will inhibit the formation of flammable mixtures of gas during the entire process and steam can be separated from the product gas of hydrogen, carbon monoxide and carbon dioxide by condensation. Step (a), the process of cracking the hydrocarbon in the first gas stream, is endothermic while step (b), reacting the oxygen-containing gas with the carbon deposited on the ceramic monolith supported catalyst, is exothermic. The heat produced in step (b) is stored in the ceramic monolith supported catalyst body. If desired, other forms of thermal mass such as chemical porcelain may be present in the reactors and employed in the step (a) of the process.

The hydrocarbon may be any gaseous or vaporous hydrocarbon either by itself or in combination with other hydrocarbon-containing gases. Preferably, the hydrocarbon can be selected from the group consisting of methane, ethane, propane, butane, benzene, and mixtures thereof.

The space velocities for production of hydrogen and carbon monoxide range from about 690 $hr^{-1}$ to about 1380 $hr^{-1}$ for the first gas stream and from about 1725 $hr^{-1}$ to about 3450 $hr^{-1}$ when air is employed in step (b). When oxygen is employed in step (b) the gas velocity is about 345 $hr^{-1}$ to about 690 $hr^{-1}$.

The temperatures at which step (a) and step (b) are performed may be between 700° and 900°C.

The first gas stream is preferably fed to the catalyst at a temperature greater than 500°C.

The second gas stream is preferably fed at a temperature greater than about 25°C and more preferably at a temperature greater than about 100°C. When the temperature is greater than 100°C steam may be included in the second gas stream.

The operating conditions of the reactor during step (a) may be tuned in a manner to yield a mixture which comprises methane and hydrogen. The feed flow rates of the first gas stream and the operating temperatures of the reactor chamber are controlled so as to produce a methane and hydrogen gas mixture, which contains about 20 to 30% by volume hydrogen. This mixture can be employed as a fuel in automotive engines and other internal combustion devices, particularly to reduce the formation of nitrogen oxides ($NO_x$) and other emissions and will improve the efficiency of the engine. The tuning of the reactor system can result in a product gas that contains a controlled amount of hydrogen ranging from about 20% to about 100% by volume, which can then be utilized in a variety of industrial applications. Studies run at 850°C and at 5 psig resulted in a gas mixture of 35% by volume of methane and 58% by volume of hydrogen.

The operating conditions of the reactor during step (b) can also be tuned preferentially to form carbon dioxide. This again involves tuning the reaction conditions such that the amount of oxygen-containing gas such as air, oxygen-enriched air, pure oxygen or mixture of oxygen and steam in the second gas stream is adjusted as it is introduced at step (b) of the reaction. By introducing at least a stoichiometric amount of the oxygen-containing gas to make the environment oxygen-rich, carbon dioxide is obtained preferentially over carbon monoxide.

The ceramic supported metal catalyst employed in the present invention may consist of a ceramic monolith support structure composed of alumina substrate and impregnated with a transition metal such as Fe, Ni and Pd or combinations thereof. The ceramic monolith support is generally a ceramic foam-like structure formed from a single structural unit wherein internal gas passages are disposed in either an irregular or regular pattern with spacing between adjacent internal gas passages. The single structural unit is used in place of conventional particulate or granular catalysts, which are less desirable in the present process. Examples of such irregularly patterned ceramic monolith supports include filters used for molten metals. Examples of regularly patterned supports include ceramic monolith honeycomb supports used for purifying exhausts from motor vehicles and used in various chemical processes. Preferred are ceramic monolith foam structures having irregular passages. Both types of ceramic monolith supports are known and are commercially available. The ceramic monolith supported catalyst consists of a ceramic foam monolith composed substantially of alumina and containing about 0.5 to about 5 wt. % transition metal, preferably iron, nickel or palladium in metallic form or mixtures thereof. Optionally, iron at 2 to 5 wt. % may be used by itself or in combination with other metals.

The reactor may contain several ceramic monolith disks including the ceramic monolith supported catalyst and the remaining disks consisting of ceramic "blanks" without catalyst to fill the void space. The blanks can be made of alumina, zirconia, cordierite or mixtures thereof. The impregnated metal, synergistically with alumina, on the ceramic monolith supported catalyst acts as a catalyst in the first step (a). The ceramic monolith supported catalyst disks may have a porosity in the range 40 to 70 pores per inch (ppi) to maximize catalyst loading. The blanks may have a porosity between 20 to 40 ppi in order to keep the pressure drop across the reactor low.

BRIEF DESCRIPTION OF THE DRAWINGS

The process according to the present invention will now be described by way of example with reference to the accompanying drawings in which:

Figure 1 is a schematic representation of a two-bed, ceramic monolith supported catalyst reactor system to produce hydrogen and optionally carbon monoxide and optionally carbon dioxide.

Figure 2 is a schematic representation of a two-bed system for producing hydrogen.

DETAILED DESCRIPTION OF THE INVENTION

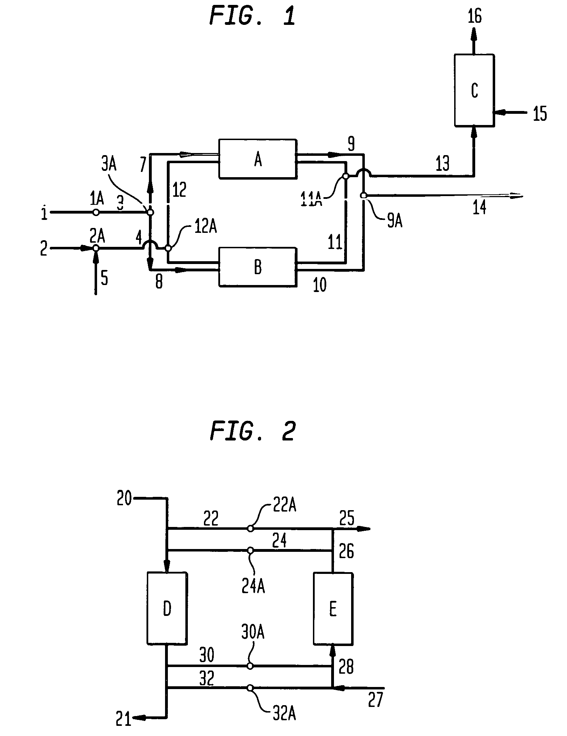

Referring to Figure 1 of the drawings, line 1 carries the first gas stream through valve 1A and line 3 to valve 3A. The first gas stream continues through line 7 to first ceramic monolith supported catalyst bed A. Line 2 directs through valve 2A and line 4 to valve 12A the second gas stream, which enters ceramic monolith supported catalyst bed A after flow of the first gas stream has stopped. In this embodiment, the two- bed apparatus allows for the continuous production of hydrogen product and allows for the introduction of a gas such as nitrogen via line 5, valve 2A, line 4 and valve 12A into either of the ceramic monolith supported catalyst beds A or B between the introduction of the first and second gas streams through line 12.

The first gas stream passes at elevated temperature through the ceramic monolith supported catalyst bed A. The hydrocarbon is converted catalytically to hydrogen and methane ("step (a)"). Some carbon is deposited on the catalyst. The hydrogen product exits the apparatus via line 9, valve 9A and line 14. As this is occurring, the second gas stream enters via line 12 ceramic monolith supported catalyst bed B where it reacts with the carbon formed on the ceramic monolith supported catalyst in step (a) and forms carbon monoxide which exits ceramic monolith supported catalyst bed B and flows to line 13 via line 11 and valve 11A. From line 13 the carbon monoxide gas stream, which may also contain some carbon dioxide, may optionally enter a shift converter C while steam is entering through line 15. The product gas of the shift conversion, namely a mixture of hydrogen and carbon dioxide, leaves though line 16.

When ceramic monolith bed B is being employed as the production reactor, the first gas stream is being directed from valve 3A to line 8 into the ceramic monolith supported catalyst bed B. The gaseous reaction product comprising hydrogen emerges from bed B and passes through line 10. This gaseous product passes out of the apparatus via valve 9A and line 14. At the same time, the second gas stream passes via line 4, valve 12A and line 12 into the ceramic monolith bed A. There it reacts with the carbon-containing deposits formed on the ceramic monolith A. A gas comprising carbon monoxide leaves the apparatus via line 11. Again, carbon dioxide may be present in this gas to some extent with the carbon monoxide and this mixture will exit the apparatus via valve 11A and line 13 and pass into the shift reactor C.

It should be noted that if a gaseous mixture of carbon monoxide/carbon dioxide is desired as an end product, this gas may be withdrawn from line 13 without entry into the shift reactor.

Referring now to Figure 2, the two bed apparatus shown therein for the production of hydrogen has a different configuration from that depicted in Figure 1. The first gas stream enters through line 20a ceramic monolith supported catalyst bed D which is a fixed bed ceramic monolith supported catalyst. The hydrocarbon-containing gas at elevated temperature reacts over the catalyst in the bed D to form hydrogen and a carbon-containing deposit on the catalyst ("step (a)"). A product gas comprising hydrogen exits the apparatus through line 21. In this mode of operation valves 22A and 32A are closed. The second gas stream enters via line 27 and line 28 a ceramic monolith supported catalyst bed E where it reacts with the carbon deposited in step (a) to form carbon monoxide and some carbon dioxide and exits the apparatus via line 26 and line 25.

When ceramic monolith supported catalyst bed E is the production bed, the first gas stream is directed through line 20, line 22, and valve 22A (or through line 20, line 24 and valve 24A) to line 26. The hydrocarbon reacts with the ceramic monolith supported catalyst in bed E. The hydrogen produced exits ceramic monolith supported catalyst bed E and passes through line 28, line 32, valve 32A and line 21 or through line 28, line 30, valve 30A and line 21. While this is occurring, the second gas stream gas is directed through line 27 and through either line 30 and valve 30A or line 32 and valve 32A into line 21 from which the second gas stream enters ceramic monolith supported catalyst bed D. The second gas stream reacts with the carbon formed in step (a) to form the carbon monoxide with some carbon dioxide gas and the resulting gas mixture leaves ceramic monolith supported catalyst bed D and passes through line 20 and through either line 22 and valve 22A or line 24 and valve 24A into line 26 and out through line 25. If desired, the carbon monoxide gas can be directed to a shift converter (not shown) where it may be employed to produce more hydrogen.

The process according to the invention is further illustrated in the following Examples.

Examples

Monolith Catalyst Preparation

Ceramic monoliths with an alumina washcoat and having 45 pores per inch (ppi) were obtained commercially and were 3 and 6 inches long with a 1.5 inch diameter. The 3 inch long monolith was soaked with water and then vacuum dried for 2 hours to note the increase in weight of the monolith. Metal containing solutions of iron, nickel and palladium were prepared by dissolving soluble compounds of Fe, Ni and Pd in water to provide 3 to 5 weight percent of the metal on the monolith.

After each ceramic monolith was soaked in the prepared metal containing solution it was vacuum dried, calcined under nitrogen overnight at 800°C and subsequently reduced in an atmosphere of 5% hydrogen in nitrogen for a similar duration. It should be noted that this reduction period was found to be somewhat inadequate for the testing because some amounts of iron oxide remained on the monolith after the reduction step.

**Testing Procedure**

The testing procedure used to test the process of the present invention was a two-step cyclic process. In step (a) methane was introduced into a furnace containing a ceramic monolith supported catalyst that had been prepared by the methods described above through a pressure regulator and a series of valves, regulating the pressure and flow rate. In step(b), air was introduced into the furnace in a counter-current fashion via pressure regulator and valves and the air flowrate was tuned to selectively favor the production of CO. A short purging step was required using nitrogen as the purging gas (the present inventors anticipate that steam may be used as well) between the thermal cracking (step (a)) and catalyst regeneration (step (b)) steps.

The furnace was operated at temperatures of 700°C, 800°C and 900°C. Methane was directed through the furnace at a number of space velocities. Testing was performed on three different catalysts: 3.5% iron, 2% nickel, and 2% palladium.

The methane conversion to hydrogen gas was measured using formula (1) below and P is the observed concentration of hydrogen in the product gas leaving the furnace. The results of this testing are presented in Tables 1a, 1b and 1c.

Table 1a. Maximum hydrogen concentration observed in product gas at 900°C

| Space Velocity ($h^{-1}$) | Fe (3.5 %) | Ni (2 %) | Pd (2 %) |
|---|---|---|---|
| 375 | 89 | 84.5 | 92.3 |
| 550 | 89 | | |
| 750 | 89 | 80 | 91.5 |
| 900 | 88.5 | | |
| 1100 | 86 | 82 | 90 |
| 2150 | | | 87 |

Table 1b. Maximum hydrogen concentration observed in product gas at 800°C

| Space Velocity ($h^{-1}$) | Fe (3.5 %) | Ni (2 %) | Pd (2 %) |
|---|---|---|---|
| 375 | 89 | 82 | 87 |
| 550 | 89 | | |
| 750 | 88 | 79 | 86 |
| 900 | | | |

Table continued

| Space Velocity (h$^{-1}$) | Fe (3.5 %) | Ni (2 %) | Pd (2 %) |
|---|---|---|---|
| 1100 | 85 | 75 | 85 |

Table 1c. Maximum hydrogen concentration observed in product gas at 700°C

| Space Velocity (h$^{-1}$) | Fe (3.5 %) | Ni (2 %) | Pd (2 %) |
|---|---|---|---|
| 375 | 80 | 76 | 62 |
| 550 | 75 | | |
| 750 | 72 | 73 | 63 |
| 900 | | | |
| 1100 | 68 | 70 | 59 |

It should be noted that if X is the percentage conversion of methane to hydrogen, and if P is the observed concentration of hydrogen in the product gas as given in Tables 1a, 1b and 1c, then a rough approximation of X can be obtained using equation (1).

$$X = P/(200-P) \qquad\qquad (1)$$

The results of this testing demonstrated that Fe and Pd catalyst were superior to Ni catalysts at 800°C and 900°C in terms of performance. It was also found that carbon monoxide is typically present in the product gas at about 2 to about 10% by volume in Step 1.

Further testing was performed as described above to determine the effects of higher catalyst loading. An iron salt solution higher in concentration than that used to produce the 3.5 weight percent catalyst was made by methods as described above. Iron loading of about 5 weight percent was achieved.

Tables 2a and 2b summarize the comparison between the 3.5 and 5 weight percent Fe monoliths in terms of maximum hydrogen concentration observed in the product gas. As used above, equation (1) provides an estimate of the methane conversion in each case.

Table 2a. Comparison of 3.5 and 5 % weight Fe monoliths at 900°C.

| Space Velocity (h$^{-1}$) | 3.5 % Fe Monolith | | 5 % Fe Monolith | |
|---|---|---|---|---|
| | Max. %H$_2$ in product | Max. %CH$_4$ cracking | Max. %H$_2$ in product | Max. %CH$_4$ cracking |
| 375 | 89 | 80.2 | 92.3 | 85.5 |
| 550 | 89.2 | 80.5 | | |
| 750 | 89 | 80.2 | 93 | 87 |
| 900 | 88.5 | 80.0 | | |
| 1100 | 86 | 75.4 | 92 | 85.2 |
| 1700 | | | 88.8 | 80.0 |

Table 2b. Comparison of 3.5 and 5 % weight Fe monoliths at 800 C.

| Space Velocity (h$^{-1}$) | 3.5 % Fe Monolith | | 5 % Fe Monolith | |
|---|---|---|---|---|
| | Max. %H$_2$ in product | Max. %CH$_4$ cracking | Max. %H$_2$ in product | Max. %CH$_4$ cracking |
| 375 | 89.4 | 80.6 | 90.1 | 82 |

Table continued

| | 3.5 % Fe Monolith | | 5 % Fe Monolith | |
| --- | --- | --- | --- | --- |
| Space Velocity (h$^{-1}$) | Max. %$H_2$ in product | Max. %$CH_4$ cracking | Max. %$H_2$ in product | Max. %$CH_4$ cracking |
| 550 | 88.8 | 80.1 | | |
| 750 | 87.7 | 78.1 | 89.7 | 81.3 |
| 1100 | 85.0 | 73.9 | | |
| 1700 | | | 81.2 | 68.4 |

Although the higher loading of Fe supported on the ceramic monolith increased methane cracking, these effects are best represented at 900°C.

**Claims**

1.   A process for producing hydrogen comprising the steps of:

   (a) passing a first gas stream containing at least one hydrocarbon over a ceramic monolith supported catalyst at a temperature sufficient to produce a gaseous reaction product containing hydrogen and to form a solid reaction product containing carbon on the ceramic monolith supported catalyst; and
   (b) passing a second gas stream containing at least one oxygen-containing gas over said ceramic monolith supported catalyst at a temperature sufficient to react with the solid reaction product containing carbon formed on the ceramic monolith supported catalyst in step (a) to produce a gaseous reaction product containing at least one of carbon monoxide and carbon dioxide.

2.   A process according to claim 1, wherein said hydrocarbon is at least one gaseous or vaporous hydrocarbon.

3.   A process according to claim 1 or claim 2, wherein said first gas stream is passed over said ceramic monolith supported catalyst at a pressure ranging from 1 bar to 30 bar and at a temperature great than 300°C.

4.   A process according to any one of the preceding claims, wherein said process is cyclical.

5.   A process according to any one of the preceding claims, wherein said ceramic monolith supported catalyst is purged with gas between steps (a) and (b).

6.   A process according to any one of the preceding claims, wherein the heat generated by the reaction in step (b) is stored in said ceramic monolith supported catalyst and employed in step (a) of said process.

7.   A process according to any one of the preceding claims, comprising completely oxidizing said carbon formed on the surface of said ceramic monolith supported catalyst to form carbon dioxide.

8.   A process according to any one of the preceding claims, wherein said ceramic monolith supported catalyst comprises a support coated with alumina and impregnated with a transition metal.

9.   A process according to claim 8, wherein said support is a ceramic foam-like structure.

10.  A process according to any one of the preceding claims, wherein said ceramic monolith supported catalyst is in the shape of a disc or a cylinder.

11.  A process according to any one of the preceding claims, wherein the feed flow rates of the first gas stream and operating temperature of the ceramic monolith supported catalyst are controlled to obtain a gaseous reaction product that primarily comprises methane and from 20% to 30% by volume of hydrogen

# FIG. 1

# FIG. 2

European Patent Office

**EUROPEAN SEARCH REPORT**

Application Number

EP 05 25 5159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/031901 A1 (BREUER NORBERT ET AL) 13 February 2003 (2003-02-13) * the whole document * | 1-11 | C01B3/26 C01B31/18 C01B31/20 B01J19/24 |
| X | FR 2 831 880 A (L'AIR LIQUIDE SOCIETE ANONYME POUR L'ETUDE ET L'EXPLOITATION DES PROCE) 9 May 2003 (2003-05-09) * the whole document * | 1-11 | |
| X | US 3 129 060 A (POHLENZ JACK B) 14 April 1964 (1964-04-14) * the whole document * | 1-11 | |
| X | US 3 355 248 A (HAYES JOHN C) 28 November 1967 (1967-11-28) * the whole document * | 1-11 | |
| X | US 3 342 561 A (POHLENZ JACK B ET AL) 19 September 1967 (1967-09-19) * the whole document * | 1-11 | |
| A | EP 0 967 174 A (NGK INSULATORS, LTD) 29 December 1999 (1999-12-29) * the whole document * | 1,2,8 | TECHNICAL FIELDS SEARCHED (IPC) C01B B01J |
| A | GB 2 275 480 A (* SHELL INTERNATIONALE RESEARCH MAATSCHAPPIJ B.V) 31 August 1994 (1994-08-31) * the whole document * | 1-3,8 | |

The present search report has been drawn up for all claims

| Place of search | Date of completion of the search | Examiner |
|---|---|---|
| The Hague | 2 December 2005 | Engelen, K |

## ANNEX TO THE EUROPEAN SEARCH REPORT
## ON EUROPEAN PATENT APPLICATION NO.

EP 05 25 5159

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2005

| Patent document cited in search report | | Publication date | Patent family member(s) | | Publication date |
|---|---|---|---|---|---|
| US 2003031901 | A1 | 13-02-2003 | DE<br>FR<br>NL<br>NL | 10136768 A1<br>2828012 A1<br>1021167 C2<br>1021167 A1 | 20-02-2003<br>31-01-2003<br>14-04-2003<br>28-01-2003 |
| FR 2831880 | A | 09-05-2003 | WO | 03040029 A1 | 15-05-2003 |
| US 3129060 | A | 14-04-1964 | NONE | | |
| US 3355248 | A | 28-11-1967 | NONE | | |
| US 3342561 | A | 19-09-1967 | NONE | | |
| EP 0967174 | A | 29-12-1999 | DE<br>DE<br>JP<br>US | 69908242 D1<br>69908242 T2<br>2000007301 A<br>2002051741 A1 | 03-07-2003<br>25-03-2004<br>11-01-2000<br>02-05-2002 |
| GB 2275480 | A | 31-08-1994 | NONE | | |

EPO FORM P0459

For more details about this annex : see Official Journal of the European Patent Office, No. 12/82